# EUROPEAN PATENT APPLICATION

(11) **EP 2 627 016 A1**
(43) Date of publication of application: **14.08.2013**
(21) Application number: 12183697.7
(22) Date of filing: 10.09.2012
(51) Int. Cl.: H04H 20/18, H04H 60/72, H04H 60/82

(54) **Electronic apparatus able to scan broadcast waves and to receive programme information from a server, and method for controlling the electronic apparatus**

(30) Priority: 13.02.2012 JP 2012028949
(71) Applicant: Kabushiki Kaisha Toshiba, Tokyo 105-8001 (JP)
(72) Inventor: Sato, Mitsue, Tokyo (JP); Aoyama, Hajime, Tokyo (JP); Kimura, Takahiro, Tokyo (JP)
(74) Representative: Henkel, Breuer & Partner

(57) **Abstract**

One embodiment provides an electronic apparatus including: a scanning module configured to perform a scanning process to scan broadcast waves including channel information of broadcast channels; a memory configured to store setting information including the channel information obtained by the scanning process; a transmission module configured to transmit the setting information stored in the memory, to an external server through a network; a reception module configured to receive program information specified by the server based on the channel information included in the setting information; and a display control module configured to make control to display a first program guide based on the program information.

## Description

### CROSS-REFERENCE TO RELATED APPLICATION(S)

This application claims priority/priorities from Japanese Patent Application No. 2012-028949 filed on February 13, 2012, the entire contents of which are incorporated herein by reference.

### FIELD

Embodiments described herein relate generally to an electronic apparatus which is, for example, connected to an external apparatus through a network, a server, and a method for controlling the electronic apparatus.

### BACKGROUND

There is a tendency that digital broadcast reception apparatuses for receiving digital television broadcasting are mounted with a function of being able to gain access to an external apparatus (for example, a Web server) through a network and display a Web page (Web site) accessed thus or display various contents (including video, audio, characters, etc.) distributed from the server.

Services through networks are still under development and tend to be improved to be more user-friendly.

### BRIEF DESCRIPTION OF DRAWINGS

A general architecture that implements the various features of the present invention will now be described with reference to the drawings. The drawings and the associated descriptions are provided to illustrate embodiments and not to limit the scope of the present invention.
Fig. 1 illustrates a main signal processing system of a reception apparatus in an embodiment.
Fig. 2 illustrates an example of an EPG displayed on the reception apparatus in the embodiment.
Fig. 3 illustrates a communication process between the reception apparatus and a server in the embodiment.
Fig. 4 illustrates another example of an EPG displayed on the reception apparatus in the embodiment.

### DETAILED DESCRIPTION

One embodiment provides an electronic apparatus including: a scanning module configured to perform a scanning process to scan broadcast waves including channel information of broadcast channels; a memory configured to store setting information including the channel information obtained by the scanning process; a transmission module configured to transmit the setting information stored in the memory, to an external server through a network; a reception module configured to receive program information specified by the server based on the channel information included in the setting information; and a display control module configured to make control to display a first program guide based on the program information.

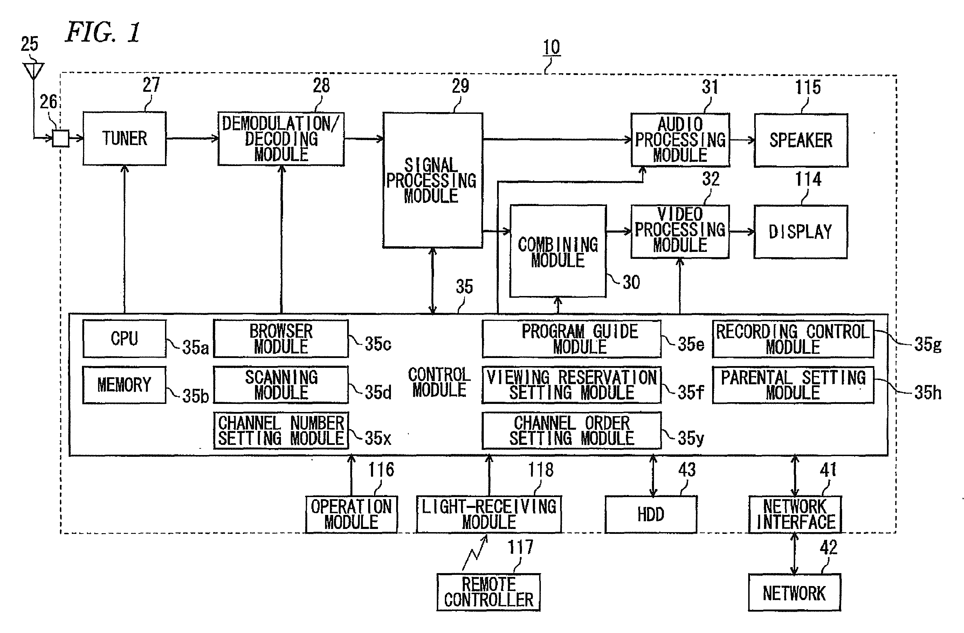

An embodiment will be described below with reference to the drawings. Fig. 1 schematically shows a signal processing system of a television broadcast reception apparatus 10 (hereinafter referred to as reception apparatus 10) which will be described in the following embodiment.

A display 114 which is, for example, a flat-panel display provided with a liquid crystal display panel, a plasma panel or the like, a speaker 115, an operation module 116, a remote controller light-receiving module 118 which receives operation information transmitted from a remote controller 117, etc. are placed in a cabinet (housing) of the reception apparatus 10.

Digital television broadcast signals (broadcast waves) received by an antenna 25 are supplied to a tuner 27 through an input terminal 26. A broadcast signal of a desired channel is selected by the tuner 27.

The broadcast signal selected by the tuner 27 is supplied to a demodulation/decoding module 28 and restored to digital video and audio signals etc., which are then outputted to a signal processing module 29. The signal processing module 29 performs predetermined digital signal processing on the digital video and audio signals supplied from the demodulation/decoding module 28, respectively.

The signal processing module 29 outputs the digital video signal to a combining module 30 and outputs the digital audio signal to an audio processing module 31. The combining module 30 superimposes an OSD (On Screen Display) signal on the digital video signal supplied from the signal processing module 29, and outputs the resulting digital video signal to a video processing module 32.

The video processing module 32 converts the inputted digital video signal to a video signal with a format in which the video signal can be displayed on a display device (the display 114) placed in a subsequent stage. Various image quality processes including a super-resolution process and a moving image improving process which will be described later are performed by the video processing module 32. The video signal outputted from the video processing module 32 is supplied to the display 114 so as to be used for video display.

The audio processing module 31 converts the inputted digital audio signal to an audio signal with a format in which the audio signal can be reproduced by the speaker 115 placed in a subsequent stage. The audio signal outputted from the audio processing module 31 is supplied to the speaker 115 so as to be used for sound reproduction.

All the operations of the reception apparatus 10 including the aforementioned various operations such as the reception operation and the channel selection operation are generally controlled by a control module 35. The control module 35 has a built-in CPU (Central Processing Unit) 35a, which receives an operation signal from the operation module 116 (for example, an operation switch provided in a side surface or the like of a body housing) placed in a body of the reception apparatus 10 or receives an operation signal sent out from the remote controller 117 and received by the light-receiving module 118, and controls the respective components to reflect the operation contents of the received operation signal thereon.

The control module 35 uses a memory 35b in controlling the respective components. The memory 35b chiefly includes a ROM (Read Only Memory) which stores a control program to be executed by the CPU 35a, a RAM (Random Access Memory) which serves to provide a work area for the CPU 35a, and a nonvolatile memory which stores various kinds of setting information and control information, etc. Various kinds of setting information such as channel information obtained by a scanning process which will be described later, information indicating channel numbers (including information indicating channel numbers set arbitrarily by a user), information indicating a channel order (including information indicating a channel order set by the user), information indicating a channel selected currently by the tuner, viewing reservation information, recording reservation information, parental setting information, language setting information, and country/region information are recorded in the memory 35b.

The control module 35 includes a browser module 35c. The browser module 35c is constituted by various kinds of software. The browser module 35c executes a communication process, a reproduction process, etc. for generating a browser screen on the display 114, or converting information (which is data of a Web page, including data such as video, audio and characters, etc.) received from a server based on programs of the software so as to construct a screen, and displaying the screen on the display 114. That is, the control module 35 is connected to an external network 42 (the Internet) through a network interface 41 (e.g. an LAN terminal) by the function of the browser module 35c. Thus, the reception apparatus 10 is configured so that the reception apparatus 10 can gain selective access to plural network servers on the network 42 and use various services (acquisition of news, acquisition of music contents, acquisition of movie contents, etc.) provided by the servers, based on user's operation on the operation module 116, the remote controller 117, or the like. The browser module 35c may function as a transmission module and a reception module.

The control module 35 includes a scanning module 35d for scanning broadcast channels. The scanning module 35d controls the tuner 27 to detect whether there are radio waves of broadcast channels which can be received. Ordinarily, there are plural broadcast channels including broadcast channels which can be viewed and broadcast channels which cannot be viewed in accordance with a region where the reception apparatus 10 is installed. Therefore, as initial setting of the reception apparatus 10, a scanning process for scanning broadcast channels is usually performed and selectable broadcast channels are set in the reception apparatus 10. When the setting of the scanning process is completed, the broadcast channels which can be received are automatically assigned to remote controller buttons correspondingly so that the user can view the broadcast channels.

Each broadcast wave includes channel information for specifying a broadcast channel. The channel information is acquired by the scanning process. The channel information is information based on which the reception apparatus 10 can specify a broadcast channel. The channel information includes, for example, a service ID, a network ID, and a TS (Transport Stream) ID. The network ID indicates a network name (for example, a broadcast provider of satellite broadcasting or cable broadcasting). The TS ID is an ID of a TS in which the broadcast channel is included. The service ID is an ID for specifying the channel determined by the broadcast provider. The service ID may be an ID for identifying a broadcast service (such as digital broadcasting, One-Seg broadcasting, BS broadcasting, CS broadcasting, or the like). The network ID may indicate a network the broadcast station belongs to. The TS ID may indicate a frequency band the broadcast channel belongs to. Default channel information obtained by the scanning process in the aforementioned manner is stored in the memory 35b.

The control module 35 includes a program guide module 35e. The program guide module 35e generates an electronic program guide (EPG) 50 or an EPG 70, which will be described layer, based on EPG information or the aforementioned channel information included in the broadcast waves received by the antenna 25. The EPG 70 may be referred to as a first program guide, and the EPG 50 may be referred to as a second program guide. Information composing the EPG is stored in the memory 35b.

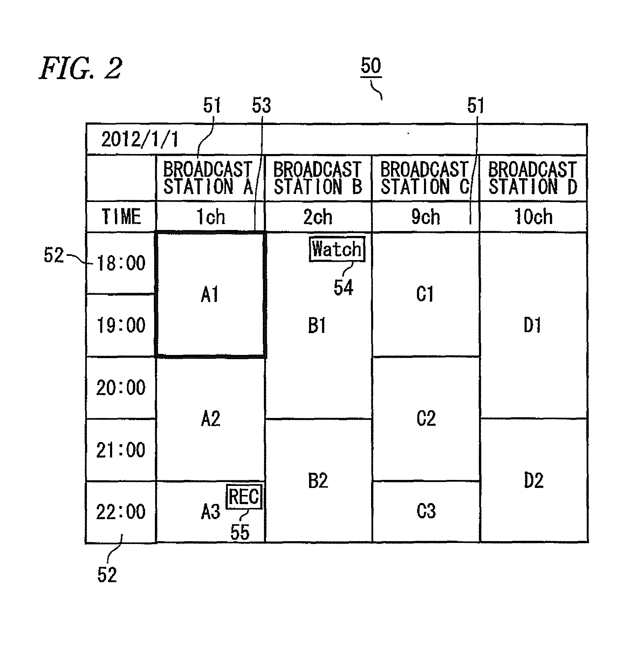

The EPG 50 shown in Fig. 2 is an example of the EPG displayed on the display 114. The EPG 50 is displayed on the display 114 based on a user's predetermined operation (for example, pushing down a program guide call button of the remote controller 117). In the EPG 50, a channel axis 51 and a time axis 52 are arranged. In the channel axis 51, plural (four in the case of Fig. 2) channel display frames corresponding to broadcast stations (broadcast station A, broadcast station B, broadcast station C and broadcast station D) and their channel numbers (1 ch, 2 ch, 9 ch and 10 ch) are arrayed horizontally. In the time axis 52, a plurality (corresponding to five hours in the case of Fig. 2) of time frames corresponding to unit times (hours in the illustrated case) consecutive in time series are arrayed vertically. Various kinds of information (A1 to A3, B1 to B2, C1 to C3, and D1 to D2) including titles of programs scheduled to be broadcast, contents of the programs, etc. are displayed in areas (program cells) designated by the channel axis 51 and the time axis 52. As for the EPG 50, a program guide may be generated using not the broadcast waves but program information received from the external network 42, or program information acquired from the network 42 and program information received from broadcast stations through the antenna 25 may be combined to form one program guide.

The control module 35 includes a channel number setting module 35x for allowing the user to set channel numbers of broadcast channels arbitrarily. That is, since the channel information acquired by the scanning process includes channel numbers, the EPG 50 can be displayed using the default channel numbers. However, a setting menu of channel numbers may be displayed on the display 114 so that the user can arbitrarily change the default channel numbers to preferred channel numbers by use of predetermined keys or the like in the remote controller 117. For example, 1 ch has been set as the channel number of the broadcast station A in Fig. 2, but the channel number can be changed to an arbitrary channel number such as 55 ch. The channel number after the change is associated with the channel information and stored in the memory 35b. The EPG 50 is displayed based on the correspondence after the change. The channel number after the change may be associated with the broadcast station and stored in the memory 35b.

The control module 35 includes a channel order setting module 35y for allowing the user to set a channel order (channel selection order) arbitrarily. A default channel order (channel selection order) is determined based on an ascending order of numbers of predetermined IDs (for example, channel numbers) of the channel information acquired by the scanning process, an alphabetical order, etc., and the EPG 50 is also displayed in this order. For example, in the EPG 50, 1 ch, 2 ch, 9 ch and 10 ch starting from the left are disposed in accordance with the channel numbers. However, a channel order setting menu may be displayed on the display 114 so that the user can arbitrarily change the default channel order to an order based on user's preference by use of predetermined keys or the like in the remote controller 117. For example, 1 ch, 2 ch, 9 ch and 10 ch starting from the left are disposed in the named order in Fig. 2, but the channel order can be changed to an arbitrary channel order such as 2 ch, 10 ch, 1 ch and 9 ch. The channel selection order in a channel-up operation, a channel-down operation, etc. may be changed in accordance with this order. The channel order after the change is associated with the channel information and stored in the memory 35b. The EPG 50 is displayed based on the channel order after the change. The channel order after the change may be associated with the channel numbers or the broadcast stations and stored in the memory 35b.

The control module 35 includes a viewing reservation setting module 35f. The user uses up/down keys, left/right keys, etc. in the remote controller 117 to operate a cursor 53 on the EPG 50 or to carry out a decision operation, so that the viewing reservation setting module 35f can set viewing reservation of each program. An indicator 54 indicating that viewing reservation has been set is displayed on a viewing-reserved program (for example, program B1) as shown in Fig. 2. When it comes to the broadcasting start time of the viewing-reserved program, the reception apparatus 10 is controlled to automatically change the channel to the program in accordance with the viewing reservation setting.

The control module 35 includes a recording control module 35g. The user uses the up/down keys, the left/right keys, etc. in the remote controller 117 to operate the cursor 53 on the EPG 50 or to carry out a decision operation, so that the recording control module 35g can set recording reservation or recording execution of each program. Based on such setting, the reception apparatus 10 can record the program whose recording reservation or recording execution has been set on a recording medium (for example, an HDD). An indicator 55 indicating that recording reservation has been set is displayed on a recording-reserved program (for example, program A3) as shown in Fig. 2. A similar indicator (an indicator indicating that recording is being executed) may be displayed on a program whose recording is being executed.

The control module 35 includes a parental setting module 35h. The parental setting module 35h sets parental control for the reception apparatus 10 so as to control access to predetermined viewing-limited programs among broadcast programs. Setting of the parental control means setting made by the user such as setting of rating information (age limit information) and setting of a password for cancelling the parental limitation. The rating information and the password information set by the user are stored in the memory 35b. When the parental control is set, the rating of a program selected for viewing or reserved for viewing or recording is checked by the parental setting module 35h. That is, whether access to the program should be blocked or not is determined in accordance with the setting of the parental control. When access to a program beyond the rating set by the user is attempted, a screen for inputting a password is displayed on the display 114, and comparison is made to find out whether the inputted password is identical to the set password or not. When the identical password is inputted, access for viewing, recording, etc. is permitted. When viewing of a program that should be viewing-limited due to adult rating or the like is attempted, access to the program is limited by this function to block the program from being viewed unless a proper password is inputted.

An HDD (Hard Disk Drive) 43 is connected to the control module 35. The HDD 43 may be built in the reception apparatus 10 or externally attached to the reception apparatus 10 through an interface of USB or the like. The control module 35 makes control to record digital video and audio signals obtained from the aforementioned demodulation/decoding module 28 on the HDD 43 based on a user's operation on the operation module 116, the remote controller 117, etc. The control module 35 may also make control to reproduce a program recorded on the HDD 43.

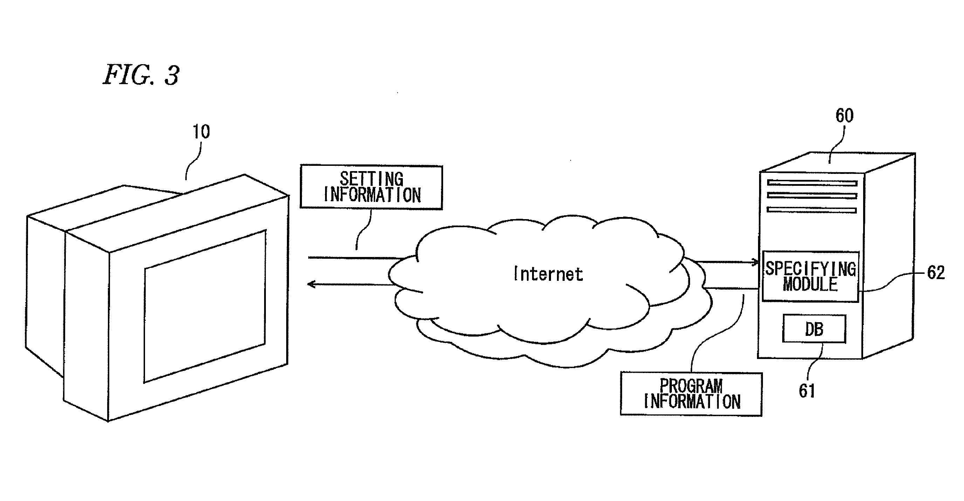

Next, the operation of the reception apparatus and the server described in the embodiment will be described with reference to Fig. 3 which is a system view. Fig. 3 shows the relation between the reception apparatus 10 and a server 60.

The server 60 is, for example, a server which provides a service for distributing program information including an electronic program guide. Various data for provision of the service are stored in the server 60. For example, the server 60 may include information the same as the aforementioned program information (information indicating broadcast stations, channel numbers, broadcasting times of programs, and contents of the programs) composing the EPG 50, and preferably further include a database (DB) 61 in which different program information (for example, detailed information of cast of each program, advertisement information and video clip information relevant to the program, news information about the program, etc.) from the EPG 50 is stored. The server 60 may provide a service for distributing moving images of a movie or drama or the like based on VOD (Video On Demand). The server 60 includes a transmission module and a reception module which are not shown.

The server 60 includes a specifying module 62 which receives setting information of the reception apparatus 10 transmitted from the reception apparatus 10 and makes control to specify information (for example, program information) to be transmitted to the reception apparatus 10 from the DB 61 based on the setting information. The server 60 is configured in such a manner that when the server 60 performs a communication process with the reception apparatus 10 (for example, when the reception apparatus 10 starts to gain access to the server 60), the server 60 detects various kinds of setting information by using the specifying module 62 and provides the reception apparatus 10 with a service preferred by the user in accordance with the setting information. The setting information includes apparatus information of the reception apparatus 10, channel information obtained by the scanning process, information indicating channel numbers (including information indicating channel numbers set arbitrarily by the user), information indicating a channel order (including information indicating a channel order set by the user), information indicating a channel selected currently by the tuner, viewing reservation information, recording reservation information, parental setting information, language setting information, country/region information, etc.

Description will be made on a process for displaying contents when the reception apparatus 10 receives the contents from the server 60 through a network (the Internet). The user performs a predetermined operation (for example, an operation of pushing a special button) on the remote controller 117 to issue a request to receive a program information distribution service (that is, a distribution service of the server 60) to the reception apparatus 10. On accepting the user's request through the light-receiving module 118, the browser module 35c sends a command (a request to receive the service of the server 60) to the server 60 through the network interface 41 and the network 42 (the Internet).

In this communication process, the browser module 35c makes control to transmit the setting information of the reception apparatus 10 stored in the memory 35b to the server 60. The transmitted setting information includes, for example, the channel information of each broadcast channel obtained by the scanning process in the reception apparatus 10. As described above, the channel information is information for specifying the broadcast channel, for example, including a service ID, a network ID, and a TS (Transport Stream) ID.

The server 60 performs a process for specifying data to be transmitted to the reception apparatus 10 based on the channel information contained in the received setting information. That is, under the control of the specifying module 62, the server 60 specifies program information of each broadcast channel which can be received (selected) the reception apparatus 10, from the database 61 based on the channel information. In other words, program information about each broadcast channel which can be actually viewed on the reception apparatus 10 is selectively specified from a large amount of data recorded in the database 61 by the server 60.

The browser module 35c performs a communication process with the server 60, and receives data transmitted from the server 60. The data (program information) transmitted from the server 60 are specified based on the setting information of the reception apparatus as described above. For example, the data are information described in HTML (HyperText Markup Language), including image information such as still images, and a program (software) for executing various processes called scripts.

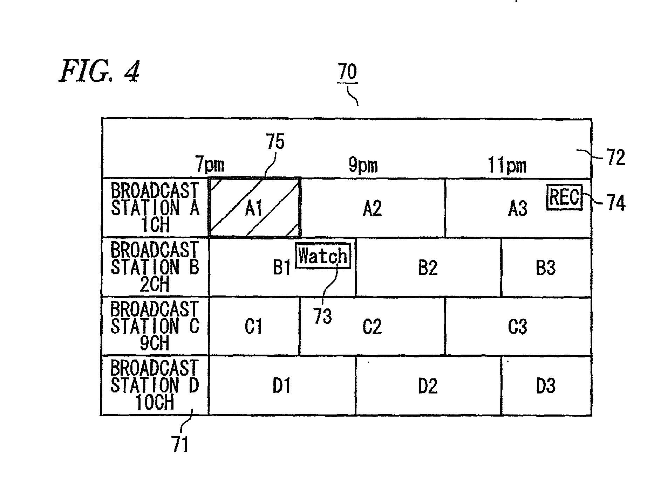

The browser module 35c generates an electronic program guide based on the data received from the server 60. For example, the EPG 70 is displayed on the display 114 as shown in Fig. 4. At this occasion, the CPU35a may function as a display control module. For example, a channel axis 71 and a time axis 72 are arranged in the EPG 70, as shown in Fig. 4. In the channel axis 71, plural (four in the case of Fig. 4) channel display frames corresponding to broadcast stations (broadcast station A, broadcast station B, broadcast station C and broadcast station D) and their channel numbers (1 ch, 2 ch, 9 ch and 10 ch) are arrayed vertically. The time axis 72 is disposed horizontally correspondingly to consecutive hours in time series. Various kinds of information (A1 to A3, B1 to B3, C1 to C3, and D1 to D3) including titles of respective programs scheduled to be broadcast, contents of the programs, etc. are displayed in areas (program cells) designated by the channel axis 71 and the time axis 72. The user can perform, on the EPG 70, operations substantially the same with the above-described operations (cursor selection, viewing reservation setting, recording reservation setting or recording execution) performed on the EPG 50. Configuration may be made so that the user can perform another operation (such as program search) than the aforementioned operation on the EPG 70.

According to the embodiment, as described above, the channel information of broadcast channels obtained by the scanning process of the reception apparatus 10 is transmitted to the server 60. Thus, it is possible to provide an EPG with the program information of the broadcast channels narrowed to channels the user can view on the reception apparatus 10.

For example, even if the server 60 records a broad range of program information in a country in the database 61, the program information may include broadcast channels or programs which cannot be viewed (selected) actually in the region where the reception apparatus 10 is installed. In this case, even if the program information of a large number of broadcast channels are received from the server 60 and displayed as an EPG on the reception apparatus 10, the large number of broadcast channels may contain broadcast channels which cannot be selected actually. On this occasion, the user cannot view programs of the broadcast channels which cannot be selected actually so that program information of the broadcast channels which cannot be selected actually may be unnecessary information for the user.

In the embodiment, however, the channel information of broadcast channels obtained by the scanning process of the reception apparatus 10 is transmitted to the server 60. In this manner, the user can check a service (EPG 70) in which program information has been narrowed to broadcast channels the user can view actually. It is therefore possible to improve the user-friendliness about the service of the server 60.

The setting information including the channel information may be automatically transmitted from the reception apparatus 10 to the server 60 when the reception apparatus 10 performs a communication process with the server 60. In this manner, it is unnecessary for the user to designate viewable channels for the server 60 particularly. Setting information which will be described below is also automatically received and used in the server 60.

The setting information transmitted from the reception apparatus 10 to the server 60 may include information indicating channel numbers set arbitrarily by the user. As described above, the user can change the default channel numbers to preferred channel numbers by use of predetermined keys or the like in the remote controller 117. Then, information indicating the correspondence between the channel numbers after the change stored in the memory 35b and the channel information is transmitted to the server 60.

The server 60 may be configured to also use the information indicating the correspondence between the channel numbers set by the user and the channel information, so as to specify program information of broadcast channels which can be received (selected) by the reception apparatus 10, from the database 61. In this manner, the information indicating the correspondence between the channel numbers set by the user and the broadcast stations is reflected on data (program information) transmitted from the server 60.

According to this configuration, it is possible to provide a service (EPG 70) in which the relation between the channel numbers set by the user and the broadcast stations is reflected. Accordingly, when the user checks the EPG 70, the difference between the EPG 70 and the EPG 50 as to the correspondence between channel numbers and broadcast stations is so small that the user can confirm the contents of the two EPGs properly.

The setting information transmitted from the reception apparatus 10 to the server 60 may include information indicating a channel order set arbitrarily by the user. As described above, the user can change the default channel order to an arbitrary channel order by use of predetermined keys or the like in the remote controller 117. Then, information indicating the correspondence between the channel order after the change stored in the memory 35b and the channel numbers or the channel information is transmitted to the server 60.

The server 60 also uses the information indicating the correspondence between the channel order set by the user and the channel numbers or the channel information, so as to specify program information of broadcast channels which can be received (selected) by the reception apparatus 10, from the database 61. In this manner, the information indicating the correspondence between the channel order set by the user and the broadcast stations or the channel numbers is reflected on data (program information) transmitted from the server 60.

According to this configuration, it is possible to provide a service (EPG 70) in which the relation between the channel numbers set by the user and the broadcast stations is reflected. Accordingly, when the user checks the EPG 70, there is no difference in channel order between the EPG 70 and the EPG 50 so that the user can confirm the contents of the two EPGs properly.

The setting information transmitted from the reception apparatus 10 to the server 60 may include viewing reservation setting information set arbitrarily by the user. As described above, the user can set viewing reservation of each program by operating the cursor 53 on the EPG 50 or performing a decision operation. Then, information indicating the viewing reservation setting information stored in the memory 35b is transmitted to the server 60.

The server 60 also uses the viewing reservation setting information set by the user, so as to specify program information of broadcast channels which can be received (selected) by the reception apparatus 10, from the database 61. In this manner, the viewing reservation setting information is reflected on data (program information) transmitted from the server 60.

According to this configuration, it is possible to provide a service (EPG 70) in which the viewing reservation setting information set by the user using the EPG 50 is reflected. For example, an indicator such as an indicator 73 shown in Fig. 4 may show that viewing reservation of B1 has been set on the EPG 70 in the same manner as on the EPG 50. Accordingly, since viewing reservation has been set on the EPG 70 in the same manner as on the EPG 50, the user can confirm on the two EPGs that the viewing reservation has been set.

The setting information transmitted from the reception apparatus 10 to the server 60 may include information in which recording reservation or recording execution set arbitrarily by the user is set. As described above, the user can set recording reservation or recording execution of each program by operating the cursor 53 on the EPG 50 or performing a decision operation. Then, the reception apparatus 10 transmits information indicating the recording reservation or recording execution and stored in the memory 35b, to the server 60. The recording execution is not limited to execution using the EPG 50, but may be performed during viewing of a program.

The server 60 also uses the information in which recording reservation or recording execution set by the user is set, so as to specify program information of broadcast channels which can be received (selected) by the reception apparatus 10, from the database 61. In this manner, the information about the recording reservation and/or the information about the recording execution is reflected on data (program information) transmitted from the server 60.

According to this configuration, it is possible to provide a service (EPG 70) in which recording information set by the user is reflected. For example, an indicator such as an indicator 74 shown in Fig. 4 may show that recording reservation of A3 has been set also on the EPG 70. Accordingly, since recording reservation or recording execution has been set on the EPG 70 in the same manner as on the EPG 50, the user can confirm on the two EPGs that the recording reservation or the recording execution has been set.

The setting information transmitted from the reception apparatus 10 to the server 60 may include parental information set by the user. As described above, for example, the user can set rating information or set a password for cancelling a parental limitation so as to execute parental control. Then, the reception apparatus 10 transmits the parental information stored in the memory 35b to the server 60.

The server 60 also uses the parental information set by the user, so as to specify program information of broadcast channels which can be received (selected) by the reception apparatus 10, from the database 61. In this manner, the parental information is reflected on data (program information) transmitted from the server 60.

According to this configuration, the server 60 can provide a service (EPG 70) in which the parental information set by the user is reflected. Accordingly, parental control suitable for the user can be carried out in execution of the service of the server 60 when the user performs an operation for program viewing, viewing reservation, recording reservation, program purchase or the like using the EPG 70.

The setting information transmitted from the reception apparatus 10 to the server 60 may include information about a channel selected currently by the user through the tuner 27. As described above, the user can use the operation module 116, the remote controller 117 or the like to select a channel to view. Then, the reception apparatus 10 transmits the information about the currently selected channel to the server 60.

The server 60 also uses the information about the channel viewed currently by the user, so as to specify program information of broadcast channels which can be received (selected) by the reception apparatus 10, from the database 61. In this manner, the information about the currently selected channel is reflected on data (program information) transmitted from the server 60.

According to this configuration, the server 60 can provide a service (EPG 70) in which the information about the channel selected currently by the user is reflected. Preferably, the channel or the program selected currently is focused, for example, by a cursor 75 shown in Fig. 4 in a recognizable manner on the EPG 70. Accordingly, the user can confirm the currently selected broadcast channel and program on the two EPGs, and can quickly discriminate information about the channel viewed currently, from programs contained in the EPG 70.

According to the embodiment, as described above, configuration is made in such a manner that various kinds of setting information of the reception apparatus 10 are transmitted to the server 60 so that a service (EPG 70 in the aforementioned embodiment) suitable for the user can be provided in the reception apparatus 10 in accordance with the setting information.

The invention is not limited to the aforementioned embodiment or the drawings per se, but constituent members may be variously modified without departing from the scope of the invention. For example, although an electronic program guide (EPG 70) is exemplified as a service by the server 60, the server 60 may provide a service for distributing moving images of a movie or drama or the like based on VOD (Video On Demand). The invention can be applied broadly to services by which setting information of the reception apparatus can be used.

The information specifying process made by the server 60 may be automatically carried out by a communication process between the reception apparatus 10 and the server 60, but may be carried out in accordance with a user's operation. For example, a selection menu as to whether to send setting information of the reception apparatus 10 to the server 60 side or not or a selection menu as to whether to carry out the specifying process or not may be displayed on the display 114 of the reception apparatus 10. A given command is transmitted to the server 60 in accordance with a user's operation on the selection menu. The specifying process may be then carried out as soon as the server 60 receives the command. That is, configuration may be made in such a manner that these selection menus are displayed because there is a possibility that there are users who do not want to transmit the setting information of the reception apparatus 10 to the server 60 or who do not want to carry out the specifying process.

Plural constituent members disclosed in the aforementioned embodiment may be combined suitably to form various inventions. For example, some constituent members may be removed from all the constituent members disclosed in the embodiment. Further, constituent members according to different embodiments may be combined suitably.

## Claims

1. An electronic apparatus comprising:
a scanning module configured to perform a scanning process to scan broadcast waves including channel information of broadcast channels;
a memory configured to store setting information including the channel information obtained by the scanning process;
a transmission module configured to transmit the setting information stored in the memory, to an external server through a network;
a reception module configured to receive program information specified by the server based on the channel information included in the setting information; and
a display control module configured to make control to display a first program guide based on the program information.

2. The apparatus of Claim 1, further comprising:
a channel number setting module configured to allow a user to set channel numbers for the broadcast channels arbitrarily; and
a program guide generating module configured to generate a second program guide based on the setting information and the channel numbers set by the channel number setting module,
wherein the transmission module transmits information indicating the channel numbers set by the channel number setting module to the server, and
wherein the display control module makes control to display the first program guide including channels numbers having the same correspondence as correspondence between the channel numbers and the broadcast channels in the second program guide.

3. The apparatus of Claim 2, further comprising:
a channel order setting module configured to allow the user to set a channel order of the second program guide arbitrarily,
wherein the transmission module transmits information indicating the channel order of the second program guide set by the channel order setting module to the server; and
wherein the display control module makes control to display the first program guide including the same channel order as the channel order of the second program guide.

4. The apparatus of Claim 1, further comprising:
a channel selection module configured to select one from the broadcast channels,
wherein the transmission module configured to transmit information indicating the broadcast channel selected by the channel selection module to the server, and
wherein the display control module makes control to display the first program guide in which a broadcast channel or program corresponding to the broadcast channel selected by the channel selection module is focused.

5. The apparatus of Claim 2, further comprising:
a viewing reservation setting module configured to set viewing reservation of a program contained in the second program guide,
wherein the transmission module transmits information indicating the viewing reservation set by the viewing reservation setting module to the server, and
wherein the display control module makes control to display the first program guide including an indicator indicating that viewing of the same program as the program whose viewing reservation has been set has been reserved.

6. The apparatus of Claim 2, further comprising:
a recording reservation setting module configured to set recording reservation of a program contained in the second program guide,
wherein the transmission module transmits information indicating the recording reservation set by the recording reservation setting module to the server, and
wherein the display control module makes control to display the first program guide including an indicator indicating that recording of the same program as the program whose recording reservation has been set has been reserved.

7. The apparatus of Claim 2, further comprising:
a parental setting module configured to allow the user to make parental setting for limiting access to programs contained in the second program guide,
wherein the transmission module transmits information indicating the parental setting to the server, and
wherein the display control module makes control to apply the same parental setting as the parental setting to programs contained in the first program guide.

8. A server connected to an external apparatus through a network, comprising:
a reception module configured to receive setting information including channel information about broadcast channels obtained by a scanning process of the external apparatus, from the external apparatus;
a specifying module configured to specify program information to be transmitted to the external apparatus based on the channel information included in the setting information; and
a transmission module configured to transmit the program information specified by the specifying module to the external apparatus.

9. A method for controlling an electronic apparatus, comprising:
using a scanning module to perform a scanning process to scan broadcast waves including channel information of broadcast channels;
using a memory to store setting information including the channel information obtained by the scanning process;
using a transmission module to transmit the setting information including the channel information to an external server through a network;
using a reception module to receive program information specified by the server based on the channel information included in the setting information; and
using a display control module to make control to display a first program guide based on the program information.
